Europäisches Patentamt

European Patent Office

Office européen des brevets

(11) Veröffentlichungsnummer: **0 103 692**
**A2**

(12) **EUROPÄISCHE PATENTANMELDUNG**

(21) Anmeldenummer: 83106819.2

(22) Anmeldetag: 12.07.83

(51) Int. Cl.³: **F 02 B 75/06**

(30) Priorität: 22.09.82 DE 3234980

(43) Veröffentlichungstag der Anmeldung:
28.03.84 Patentblatt 84/13

(84) Benannte Vertragsstaaten:
DE FR GB IT SE

(71) Anmelder: Klöckner-Humboldt-Deutz
Aktiengesellschaft
Deutz-Mülheimer-Strasse 111 Postfach 80 05 09
D-5000 Köln 80(DE)

(72) Erfinder: Honrath, Kurt, Dr.-Ing.
Auf dem Rosenberg 60
D-5064 Rösrath 1(DE)

(54) Hubkolbenbrennkraftmaschine mit Massen- bzw. Momentenausgleich.

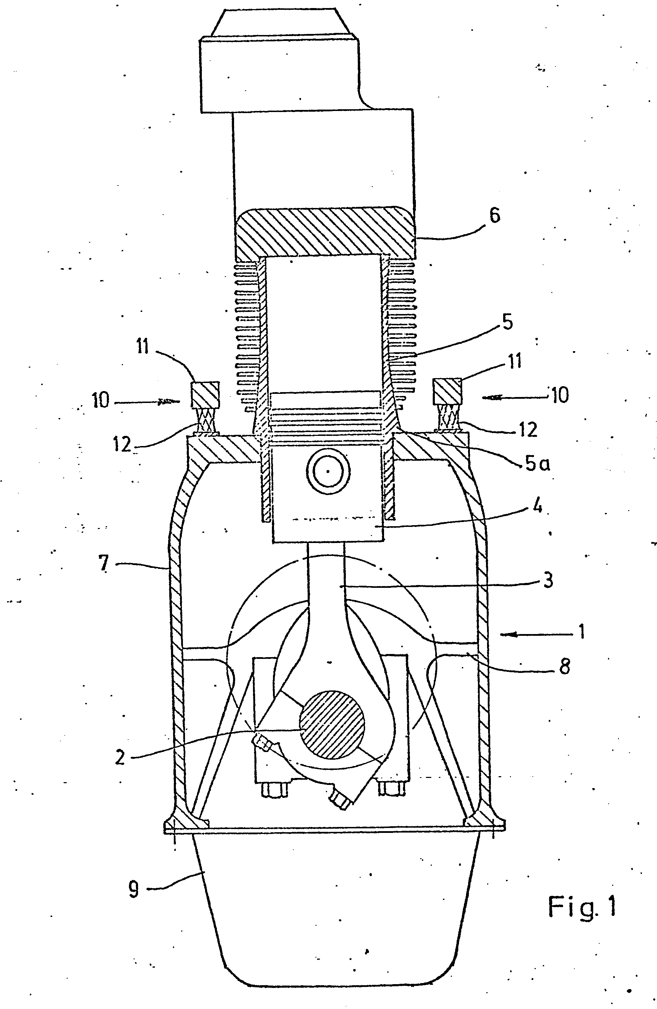

(57) Es wird eine Einrichtung zum Ausgleich von Massenkräften und Massenmomenten an einer Hubkolbenbrennkraftmaschine orgeschlagen, die aus schwingbaren Hilfsmassen besteht, die an geeigneten Stellen an der Hubkolbenbrennkraftmaschine 1 vorgesehen sind und in Richtung der auszugleichenden Massenkräfte bzw. Massenmomente abgestützt sind. Die Abstützung erfolgt über Federn 14 oder bevorzugt über parallel geschaltete Federn 14 und Dämpfer 15 oder über zu elastischen Feder-Dämpfer-Elementen zusammengesetzten Federn 14 und Dämpfern 15. Mit der Erfindung wird ein kostengünstiger und mit geringem Bauaufwand zu realisierender zuverlässiger Ausgleich der Massenkräft und Massenmomente angestrebt (Fig. 1).

EP 0 103 692 A2

Fig. 2

0103692

5000 Köln 80, den 16.09.1982
Unser Zeichen: AE-ZPB N/P/B D 82/29

<u>Hubkolbenbrennkraftmaschine mit Massen- bzw.
Momentenausgleich</u>

Die Erfindung bezieht sich auf eine Einrichtung zum
Ausgleich von Massenkräften und Massenmomenten an
Hubkolbenbrennkraftmaschinen.

Es ist bekannt , die Massenkräfte und Massenmomente
durch Ausgleichsgewichte, die an Wellen befestigt
sind und mit Kurbelwellendrehzahl oder doppelter
Kurbelwellendrehzahl umlaufen, zu unterdrücken.
Derartige Massenausgleichsgetriebe sind in der Reihe "Die Verbrennungskraftmaschine", Buch "Kräfte,
Momente und deren Ausgleich in der Verbrennungskraftmaschine", H. Maaß/H. Klier, Springer Verlag
Wien, New York, 1981 unter Punkt 5.1 und 5.2 beschrieben. Sie erfordern jedoch einen großen Bauaufwand in Form von Wellen, Lagern und Zahnrädern
sowie deren Schmierung.

Aufgabe der vorliegenden Erfindung ist es, die Massenkräfte und Massenmomente an Hubkolbenbrennkraftmaschinen auszugleichen, wobei jedoch ein erheblich
geringerer Bauaufwand angestrebt wird, der mit erheblich geringeren Kosten einen zuverlässigen Ausgleich der Kräfte und Momente liefert.

Gelöst wird die Aufgabe der Erfindung dadurch, daß
an geeigneter Stelle bzw. geeigneten Stellen an der
Hubkolbenbrennkraftmaschine schwingbare Hilfsmassen
befestigt sind, die in Richtung der auszugleichenden Massenkräfte bzw. Massenmomente federnd abgestützt sind. Durch geeignete Auslegung der Federn sowie der Größe der Massen und ihre Anlenkrichtung ist es in vorteilhafter Weise möglich, die Massenkräfte und Massenmomente zu unterdrücken. Der erfindungsgemäße Vorschlag gilt ohne jegliche Einschränkungen dann, wenn z.B. die Hubkolbenbrennkraftmaschine mit einer vorgegebenen konstanten Drehzahl dauernd oder zumeist umläuft. Dann können die auftretenden Massenkräfte und Massenmomente vollständig exakt ausgeglichen werden, da die Massenkräfte und Massenmomente eine bestimmte Schwingungsfrequenz und eine bestimmte Amplitude aufweisen, denen die Hilfsmassen, die Federn und Anlenkung genau angepaßt werden können.

Ein guter Ausgleich der Massenkräfte und Massenmomente auch bei Hubkolbenbrennkraftmaschinen mit einem weitem Drehzahlbereich ist gemäß der Erfindung dadurch möglich, daß zusätzlich zu den Federn parallel geschaltete Dämpfer vorgesehen sind, durch die der Frequenzbereich, in denen die Hilfsmassen wirksam sind, wesentlich erweitert werden kann. Dabei können die Federn und Dämpfer zu elastischen Feder-Dämpfer-Elementen, z.B. Gummielementen, zusammengefaßt sein. Der erfindungsgemäße Massen- und Momentenausgleich durch die Hilfsmassen ist unabhängig von der Art und Bauweise der Hubkolbenbrennkraftmaschine. Der Massenausgleich ist sowohl bei Reihen- als auch bei V-Maschinen, von Einzylinder- bis mehrzylindrigen Hubkolbenbrennkraftmaschinen und bei Luft- oder Wasserkühlung in gleicher Weise möglich. Je nach Bauweise der Hubkolbenbrennkraftmaschine können die Hilfsmassen im Bereich der Zylinderköpfe, im Bereich der Zylinderrohre bzw. des Maschinengestells oder auch im Bereich des Kurbelgehäuses angebracht sein.

Bei Hubkolbenbrennkraftmaschinen mit luftgekühlten Zylinderrohren ergibt sich in vorteilhafter Weise die Möglichkeit, daß die Hilfsmassen im Bereich der Zylinderfüße innerhalb oder außerhalb des Kurbelgehäuses angeordnet sind. Dies läßt sich baulich in einfacher Weise bewerkstelligen. Darüberhinaus ist der Kühlbedarf in diesem Bereich der Zylinderrohre auch geringer, so daß dort die Hilfsmassen ohne weiteres untergebracht werden können. Sie können dabei zu einer plattenförmigen Masse mit Aussparungen für die Zylinderrohre zusammengefaßt sein, und eine kompakte Einheit bilden. Auch der V-Raum von Hubkolbenbrennkraftmaschinen mit V-Anordnung der Zylinder ist zur Aufnahme der Hilfsmassen bzw. einer Hilfsmasse gut geeignet.

Die Hilfsmasse bzw. Hilfsmassen können auch unterhalb der Drehachse der Kurbelwelle innerhalb bzw. außerhalb des Kurbelgehäuses bzw. an der Ölwanne angeordnet sein. Dabei können die Masse bzw. Massen an Lagerböcken der Hauptlager der Kurbelwelle befestigt werden.

Je nach baulicher Ausgestaltung der Hubkolbenbrennkraftmaschine können die Hilfsmasse bzw. die Hilfsmassen auch ringförmig, als Halb- oder Vollring ausgebildet und in den Endbereichen der Hubkolbenbrennkraftmaschine, insbesondere koaxial zur Kurbelwelle angeordnet sein. Je nach Abstützung der Hilfsmassen in einer oder mehreren Bewegungsrichtungen innerhalb von Ebenen quer zur Längsachse der Kurbelwelle können sowohl Massenkräfte als auch Massenmomente aufgenommen werden. Zum Ausgleich von Massenmomenten, die auch als äußere Momente oder Kippmomente bzw. Längskippmomente bezeichnet werden, können die vorzugsweise als Vollring ausgebildeteten Hilfsmassen auch ringförmig abgestützt sein.

Zur weiteren Erläuterung der Erfindung wird auf die Zeichnungen verwiesen, in denen Ausführungsbeispiele vereinfacht dargestellt sind. Es zeigen:

Fig 1: schematisch einen Querschnitt einer Hubkolbenbrennkraftmaschine, bei der eine erfindungsgemäße Einrichtung außerhalb des Kurbelgehäuses vorgesehen ist;

Fig. 2 und 3: ebenfalls einen Querschnitt durch eine Hubkolbenbrennkraftmaschine mit alternativ ausgebildeten Massen- bzw. Momentenausgleichseinrichtungen innerhalb des Kurbelgehäuses;

Fig. 4: einen Teillängsschnitt der Hubkolbenbrennkraftmaschine entsprechend der Schnittlinien IV-IV in Fig. 3;

Fig. 5 schematisch einen Querschnitt einer Hubkolbenbrennkraftmaschine mit V-Anordnung der Zylinder, bei der im V-Raum eine erfindungsgemäß vorgeschlagene Einrichtung vorgesehen ist;

Fig. 6: einen Teillängsschnitt einer Hubkolbenbrennkraftmaschine mit einer alternativ möglichen Anordnungs- und Ausbildungsmöglichkeit einer erfindungsgemäßen Massen- bzw. Momentenausgleichseinrichtung an den Stirnseiten einer Hubkolbenbrennkraftmaschine.

In den Fig. 1 bis 6, in denen grundsätzlich funktionsgleiche Teile mit gleichen Bezugsziffern versehen sind, ist, soweit im Einzelnen dargestellt, mit 1 eine Hubkolbenbrennkraftmaschine bezeichnet, die funktionsgemäß mit einer Kurbelwelle 2, Pleuel 3, Kolben 4, Zylinderrohr 5, Zylinderkopf 6, Kurbelgehäuse 7, Kutelwellenlagerböcken 8 und einer Ölwanne 9 versehen ist.

Nach dem Ausführungsbeispiel nach Fig. 1 ist außen am Kurbelgehäuse 7 eine erfindungsgemäße Einrichtung 10 zum Ausgleich von Massenkräften und Massenmomenten angeordnet, die aus schwingbaren Hilfsmassen 11 besteht, die in Richtung der auszugleichenden Massenkräfte bzw. Massenmomente - hier parallel zur Kolbenlängsachse - abgestützt sind. Die Abstützung erfolgt über elastische Gummielemente 12, wobei die Elastizität der Gummielemente 12 und somit der Frequenzbereich, in dem die Hilfsmassen 11 wirksam werden, auf den Drehzahlbereich der Hubkolbenbrennkraftmaschine 1 abgestimmt ist. Die in diesem Ausführungsbeispiel gezeigte Anordnung der Ausgleichseinrichtung 10 außerhalb des Kurbelgehäuses 7 im Bereich der Zylinderfüße 5a des Zylinderrohres 5 läßt sich baulich in einfacher Weise bewerkstelligen und beeinträchtigt den Kühlluftstrom bei Luftkühlung der Hubkolbenbrennkraftmaschine 1 unwesentlich.

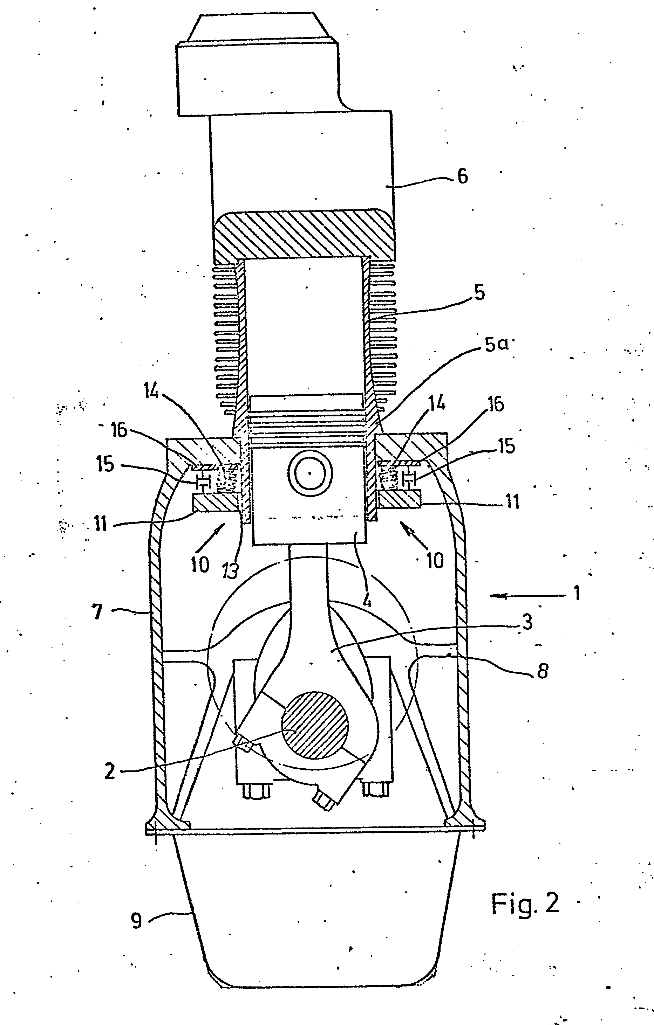

Im Ausführungsbeispiel nach Fig. 2 ist im Gegensatz zum Ausführungsbeispiel nach Fig. 1 die Einrichtung 10 zum Ausgleich der Massenkräfte bzw. Massenmomente innerhalb des Kurbelgehäuses 7 angeordnet. Außerdem sind die Hilfsmassen 11 zu einer plattenförmigen Gesamtmasse zusammengefaßt und weisen eine Aussparung 13 für das Zylinderrohr 5 auf. Die Hilfsmassen 11 sind über parallel geschaltete Federn 14 und Dämpfer 15 unter Zwischenlage eines Bauteils 16 am Kurbelgehäuse 7 befestigt.

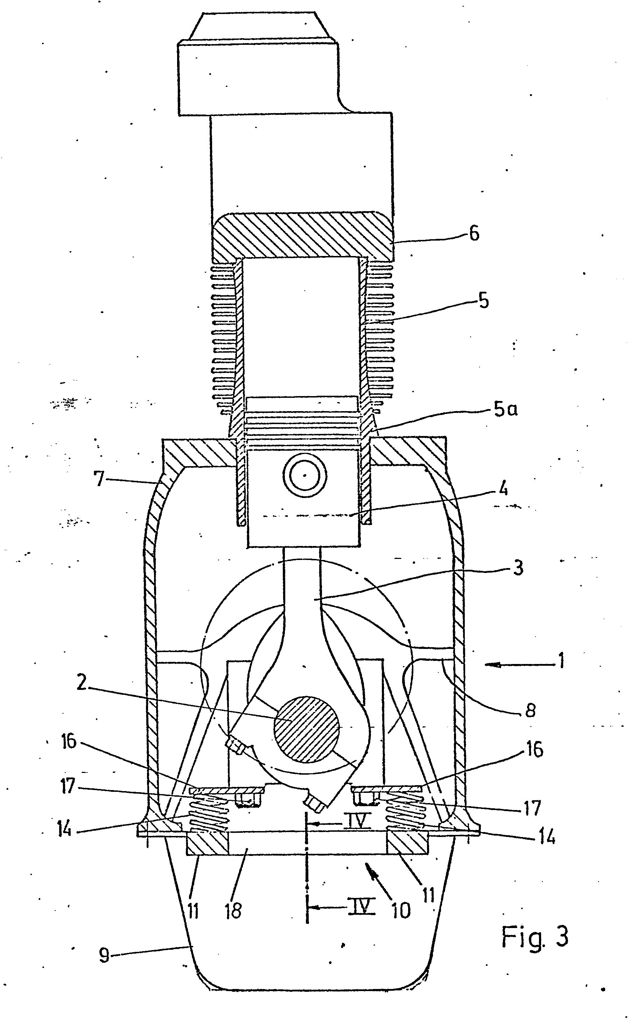

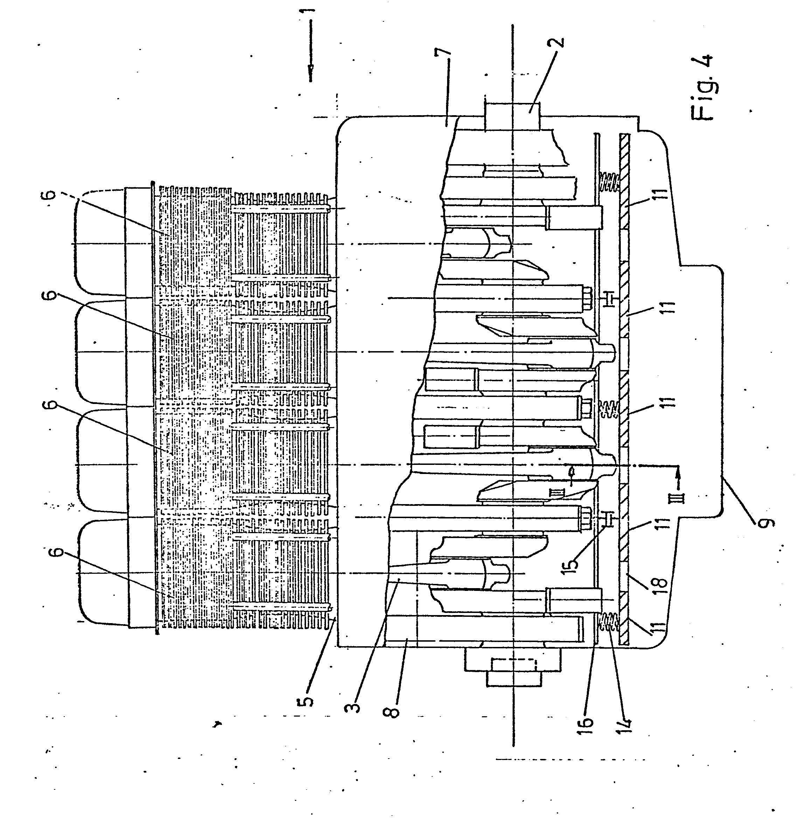

Im Ausführungsbeispiel nach Fig. 3 und 4 sind die Hilfsmassen 11 unterhalb der Drehachse der Kurbelwelle 2 innerhalb des Kurbelgehäuses 7 bzw. der Ölwanne 9 angeordnet und über Schraubenverbindungen 17 an den Lagerböcken 8 der Hauptlager der Kurbelwelle 2 befestigt. Die Hilfsmassen 11 der einzelnen Zylinder der Hubkolbenbrennkraftmaschine sind als plattenförmige Gesamtmasse zusammengefaßt und mit Aussparungen 18 versehen, die eine hinderungsfreie Drehbewegung der Kurbelwelle 2 bzw. der Pleuel 3 auch im Schwingungszustand der Hilfsmassen 11 gewährleisten. Die Abstützung der Hilfsmassen 11 erfolgt wieder über Federn 14 und Dämpfer 15 und über Bauteile 16, die an den Lagerböcken angeschraubt sind.

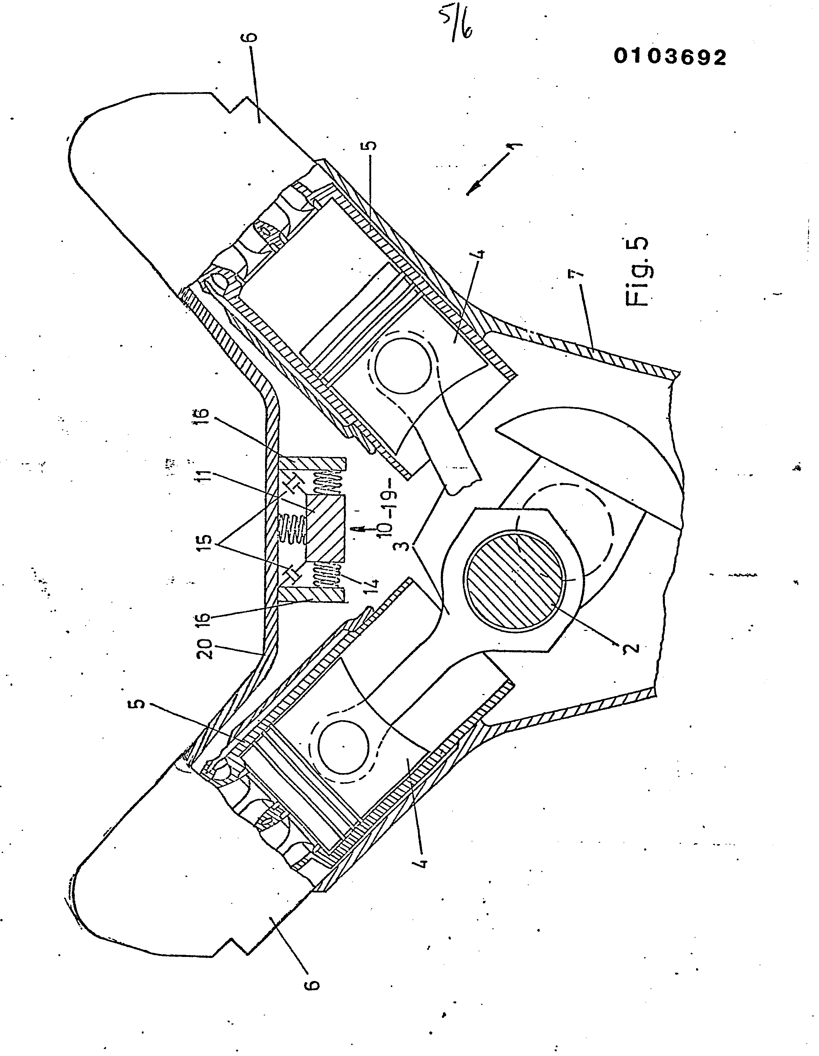

Fig. 5 zeigt eine Hubkolbenbrennkraftmaschine 1 mit V-förmig angeordneten Zylinderreihen. Hier ist die Einrichtung 10 zum Ausgleich der Massenkräfte bzw. Massenmomente im V-Raum 19 innerhalb des Kurbelgehäuses 7 vorgesehen. Die Hilfsmasse 11 ist über Federn 14 und Dämpfer 15 und Bauteile 16 an der horizontalen Abdeckung 20 des V-Raumes 19 abgestützt.

Die Abstützung der Federn 14 und der Dämpfer 15 erfolgt hier in verschiedene Richtungen; eine Feder ist senkrecht zur Abdeckung 20, zwei Federn 14 sind parallel zur Abdeckung 20 und die Dämpfer 15 jeweils parallel zur Längsachse der Kolben 4 abgestützt, so daß verschieden gerichtete Kraftkomponenten im zweidimensionalen Raum ohne weiteres ausgeglichen werden können.

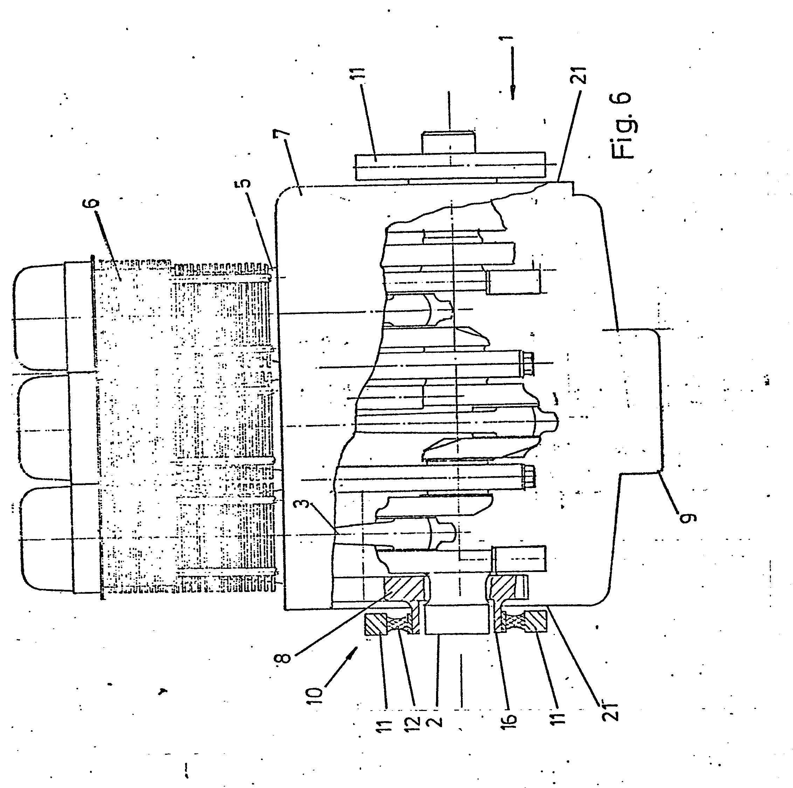

Fig. 6 zeigt schematisch einen Teillängsschnitt einer Hubkolbenbrennkraftmaschine, bei der die Hilfsmassen 11 als Vollringe ausgebildet sind und an den stirnseitigen Endbereichen 21 der Hubkolbenbrennkraftmaschine 1 koaxial zur Kurbelwelle 2 angeordnet sind. Die Abstützung erfolgt über ein ebenfalls ringförmiges Gummielement 12 und über ein ringförmiges Bauteil 16 an einem Hauptlagerbock 8 der Kurbelwelle 2. Anstelle des Hauptlagerbockes 8 kann natürlich auch ein ringförmiges Bauteil des Kurbelgehäuses verwandt werden. Dieses Ausführungsbeispiel ist insbesondere zum Ausgleich von Kipp- und Längsmomenten einer Hubkolbenbrennkraftmaschine von Bedeutung.

Es ist selbstverständlich möglich, daß die in den Figuren beispielhaft gezeigten Ausbildungs- und Anordnungsmöglichkeiten der erfindungsgemäßen Einrichtung zum Ausgleich von Massenkräften bzw. Massenmomenten auch in Kombination an einer Hubkolbenbrennkraftmaschine vorgesehen werden können.

Hubkolbenbrennkraftmaschine mit Massen- bzw.
Momentenausgleich


P a t e n t a n s p r ü c h e


1.     Einrichtung (10) zum Ausgleich von Massenkräften und Massenmomenten an Hubkolbenbrennkraftmaschinen (1),
dadurch gekennzeichnet, daß an geeigneter Stelle
bzw. geeigneten Stellen an der Hubkolbenbrennkraftmaschine (1) schwingbare Hilfsmassen (11) befestigt
sind, die in Richtung der auszugleichenden Massenkräfte bzw. Massenmomente federnd abgestützt sind.


2.     Einrichtung nach Anspruch 1,
dadurch gekennzeichnet, daß zusätzlich zu den Federn (14) parallel geschaltet Dämpfer (15) vorgesehen sind. .


3.     Einrichtung nach den Ansprüchen 1 und 2,
dadurch gekennzeichnet, daß die Federn (14) und
Dämpfer (15) zu elastischen Feder-Dämpfer-Elementen
(12), z.B. Gummielementen, zusammengefaßt sind.


4.     Einrichtung nach einem der vorhergehenden
Ansprüche mit einer luftgekühlte Zylinderrohre (5)
aufweisenden Hubkolbenbrennkraftmaschine (1),
dadurch gekennzeichnet, daß die Hilfsmassen (11) im
Bereich der Zylinderfüße (5a) innerhalb oder außerhalb des Kurbelgehäuses (7) angeordnet sind.

06.07.1983
D 82/29
0103692

5.    Einrichtung nach Anspruch 4,
dadurch gekennzeichnet, daß die Hilfsmassen (11) zu
einer plattenförmigen Masse mit Aussparungen (13)
für die Zylinderrohre (5) zusammengefaßt sind.

6.    Einrichtung nach einem der vorhergehenden
Ansprüche mit V-Anordnung der Zylinder,
dadurch gekennzeichnet, daß die Hilfsmassen (11)
bzw. die Hilfsmasse im V-Raum (19) angeordnet ist.

7.    Einrichtung nach einem der vorhergehenden
Ansprüche,
dadurch gekennzeichnet, daß die Hilfsmasse (11)
bzw. Hilfsmassen unterhalb der Drehachse der Kurbelwelle (2) innerhalb bzw. außerhalb des Kurbelgehäuses (7) bzw. einer Ölwanne (9) angeordnet sind.

8.    Einrichtung nach Anspruch 7,
dadurch gekennzeichnet, daß die Hilfsmasse (11)
bzw. Hilfsmassen an Lagerböcken (8) der Hauptlager
der Kurbelwelle (2) befestigt sind.

9.    Einrichtung nach einem der vorhergehenden
Ansprüche,
dadurch gekennzeichnet, daß die Hilfsmasse (11)
bzw. Hilfsmassen ringförmig, als Halb- oder Vollring ausgebildet und in den Endbereichen (21) der
Hubkolbenbrennkraftmaschine (1) angeordnet sind.

10.    Einrichtung nach dem vorhergehenden Anspruch,
dadurch gekennzeichnet, daß die Hilfsmasse (11)
bzw. Hilfsmassen koaxial zur Kurbelwelle (2) angeordnet sind.

**0103692**

11.    Einrichtung nach einem der vorhergehenden
Ansprüche,
dadurch gekennzeichnet, daß die Hilfsmasse (11)
bzw. Hilfsmassen ringförmig abgestützt sind.

12.    Einrichtung nach einem der vorhergehenden
Ansprüche,
dadurch gekennzeichnet, daß die Hilfsmasse (11)
bzw. Hilfsmassen in verschiedenen Richtungen, vorzugsweise zweidimensional abgestützt sind.

0103692

Fig. 1

D 82/2

0103692

Fig. 2

0103692

Fig. 3

0103692

Fig. 4

D82/29

Fig. 5

0103692

Fig. 6